# EUROPÄISCHE PATENTSCHRIFT

(11) **EP 2 125 444 B1**
(45) Veröffentlichungstag und Bekanntmachung des Hinweises auf die Patenterteilung: **30.10.2013**
(21) Anmeldenummer: 08707922.4
(22) Anmeldetag: 16.01.2008
(51) Int. Cl.: B60R 21/01, B60R 21/015, H04L 12/403, B60N 2/00

(54) **VERFAHREN ZUR KRAFTCHARAKTERISIERUNG UND SENSORSYSTEM**
METHOD FOR CHARACTERISING FORCE AND SENSOR SYSTEM
PROCEDE DE CARACTERISATION D'UNE FORCE, ET SYSTEME DETECTEUR

(30) Priorität: 26.01.2007 EP 07101282; 31.01.2007 DE 102007006296
(43) Veröffentlichungstag der Anmeldung: 02.12.2009
(73) Patentinhaber: BAG Bizerba Automotive GmbH, 72336 Balingen (DE)
(72) Erfinder: PLOCHER, Thomas, 72172 Sulz (DE)
(74) Vertreter: Hoeger, Stellrecht & Partner Patentanwälte
(86) Internationale Anmeldenummer: PCT/EP2008/050431
(87) Internationale Veröffentlichungsnummer: WO 2008/090064

(56) Entgegenhaltungen:
- WO-A-02/26531
- WO-A-2005/051723
- US-A1- 2004 068 357
- US-A1- 2005 090 959

## Beschreibung

Die Erfindung betrifft ein Verfahren zur Charakterisierung der Kraft, mit welcher ein erstes Objekt auf ein zweites Objekt wirkt, und/oder der Position des ersten Objekts am zweiten Objekt.

Die Erfindung betrifft weiterhin ein Sensorsystem zur Charakterisierung der Kraft, mit welcher ein erstes Objekt auf ein zweites.Objekt wirkt, und/oder der Position des ersten Objekts an dem zweiten Objekt.

Fahrzeuge umfassen heutzutage üblicherweise Sicherheitssysteme, die Fahr-zeuginsassen im Falle einer Kollision schützen sollen. Insbesondere soll bei einem Frontalaufprall ein Fahrzeuginsasse mittels eines Airbags geschützt werden. Es hat sich gezeigt, dass es Vorteilhaft ist, wenn das Aufblasen des Airbags in Abhängigkeit der Person, welche auf einem entsprechenden Fahrzeugsitz sitzt, gesteuert wird. Wenn ein Kind auf einem dem Airbag zugeordneten Sitz sitzt, oder eine leichte Person, dann soll der Airbag nicht so stark aufgeblasen werden, als wenn eine schwerere Person sitzt. Es hat sich als vorteilhaft erwiesen, wenn die Kraft, mit welcher die Person auf den Sitz wirkt, und/oder die Position der Person an dem Sitz als Charakterisierungsgröße zur Steuerung des Airbags verwendet wird.

Aus der DE 102 21 628 B4 ist ein Kraftmesssystem mit mindestens zwei Kraftmesszellen bekannt, die Teilkräfte der zu messenden Kraft erfassen und in ein digitales Ausgangssignal umwandeln. Das Kraftmesssystem umfasst eine elektronische Schaltung, die aus den Ausgangssignalen der mindestens zwei Kraftmesszellen ein von der Größe der zu messenden Kraft abhängiges Gesamtsignal errechnet und dieses an eine nachfolgende Elektronikeinheit zur Weiterverarbeitung oder zur Datenausgabe weitergibt. Die elektronische Schaltung, die das Gesamtsignal errechnet und an die nachfolgende Elektronikeinheit weitergibt, ist in die Elektronik mindestens einer Kraftzelle komplett integriert.

Die DE 103 54 602 A1 offenbart ein Verfahren zur Buskommunikation zwischen einem Steuergerät zur Ansteuerung von Personenschutzmitteln als Master und wenigstens einem Verbindungselement zur Gewichtsmessung in einem Fahrzeugsitz als Slave, wobei das Steuergerät dem wenigstens einen Verbindungselement eine jeweilige Adresse anhand einer jeweiligen Seriennummer des wenigstens einen Verbindungselements zuordnet.

Der Erfindung liegt die Aufgabe zugrunde, ein Verfahren und ein Sensorsystem der eingangs genannten Art bereitzustellen, welches auf einfache Weise realisierbar und montierbar ist.

Diese Aufgabe wird bei dem eingangs genannten Verfahren erfindungsgemäß von einem dadurch gelöst, dass Sensorsystem gemäß WO02/26531, welches eine Mehrzahl von beabstandeten Sensoren zur Kraftmessung umfasst, die an dem zweiten Objekt angeordnet sind, Messsignale bereitgestellt werden, an den Sensoren eine Signalverarbeitung erfolgt, und das Sensorsystem Charakterisierungsdaten bereitstellt, wobei die Signalverarbeitungsaufgaben zur Bereitstellung der Charakterisierungsdaten auf die Sensoren des Sensorsystems verteilt werden, ausgegangen wird.

Bei der erfindungsgemäßen Lösung erfolgt die Signalverarbeitung direkt an den Sensoren, wobei durch die Aufgabenteilung auf die Sensoren diese (mit ihrer jeweiligen zugeordneten Signalverarbeitungseinrichtung) grundsätzlich gleich ausgebildet sein können. Durch das Sensorsystem als Ganzes lassen sich direkt weiterverarbeitbare Charakterisierungsdaten bereitstellen.

Ein Sensorsystem, welches gemäß der erfindungsgemäßen Lösung arbeitet, lässt sich auf einfache und kostengünstige Weise ausbilden und montieren. Es muss keine separate Auswertungseinrichtung (Control Unit) für die Sensoren vorgesehen werden, da diese in die Sensoren integrierbar ist.

Es ist beispielsweise möglich, dass grundsätzlich gleich (hardwaremäßig) ausgebildete Sensoren verwendet werden, welche durch unterschiedliche Programmierung unterschiedliche Aufgaben in dem Sensorsystem bezüglich der Signalverarbeitung erfüllen.

Durch die erfindungsgemäße Lösung ist zumindest in einem gewissen Maße eine parallele Verarbeitung möglich. Weiterhin ergibt sich eine hohe Redundanz. Beispielsweise lassen sich auch bereits verteilte Aufgaben umverteilen.

Beispielsweise ist es möglich, dass bestimmte Sensoren des entsprechenden Sensorsystems verantwortlich sind für bestimmte Aufgaben. Sie können jedoch auch weitere Aufgaben "im Stillen" durchführen, für die sie grundsätzlich nicht verantwortlich sind. Dadurch ist es möglich, zu überprüfen, ob andere Sensoren (die für die Aufgaben verantwortlich sind) korrekt arbeiten. Beispielsweise wird dann ein entsprechendes Signal eines oder mehrerer Sensoren mit dem für das entsprechende Signal bzw. die entsprechenden Daten verantwortlichen Sensor verglichen. Eine zu starke Abweichung deutet auf einen Fehler hin. In diesem Falle haben bestimmte Sensoren bestimmte Verantwortungen, wobei jedoch die Sensoren weitere und insbesondere auch alle Verarbeitungsvorgänge durchführen, um eine gegenseitige Überprüfung der Sensoren zu ermöglichen.

Weiterhin ist es beispielsweise auch möglich, zumindest zeitweise einen ausgefallenen Sensor zu kompensieren. In der nicht vorveröffentlichten europäischen Anmeldung Nr. 07 101 282.7 vom 26. Januar 2007 der gleichen Anmelderin ist ein Verfahren und ein Sensorsystem beschrieben, mit dem sich ein hardwaremäßig nicht vorhandener Sensor (virtueller Sensor) über hardwaremäßig vorhandene Sensoren simulieren lässt. Dem virtuellen Sensor lassen sich virtuelle Sensorsignale zuordnen, die behandelt werden wie tatsächliche Messsignale. Auf diese Anmeldung wird ausdrücklich Bezug genommen. Wenn beispielsweise ein hardwaremäßig realisierter Sensor ausfällt, dann können durch die noch vorhandenen Sensoren virtuelle Sensorsignale bereitgestellt werden, die den ausgefallenen Sensor simulieren. Durch das erfindungsgemäße Verfahren lässt sich ein Ausfall kompensieren. Es erfolgt dann eine neue Aufgabenverteilung, d.h. die Aufgaben des ausgefallenen Sensors bezüglich der Signalverarbeitung werden einem oder mehreren anderen Sensoren zugewiesen. Dadurch ist es möglich, trotz eines Fehlers im Sensorsystem die Funktionalität des Sensorsystems zumindest für einen gewissen Zeitpunkt aufrechtzuerhalten. Beispielsweise wird im Falle eines Sensorsystems zur Bereitstellung von Charakterisierungsdaten zur Steuerung eines Airbags bei einem Ausfall eines Sensors ein Warnsignal abgegeben, beispielsweise mit dem Hinweis, möglichst schnell eine Werkstatt aufzusuchen. Für die Zwischenzeit wird der ausgefallene Sensor durch die anderen Sensoren simuliert und es erfolgt eine entsprechende Aufgabenumverteilung. Dadurch ist ein funktionierendes Sensorsystem bezüglich der Bereitstellung von Gewichtsdaten und/oder Positionsdaten realisierbar, auch wenn ein Sensor ausfällt.

Insbesondere wirkt das erste Objekt über einen ausgedehnten Bereich auf einen ausgedehnten Bereich des zweiten Objekts. Durch die Mehrzahl der Sensoren lassen sich dann Teilkräfte messen, wobei durch Verarbeitung der erhaltenen Messsignale sich Charakterisierungsdaten berechnen lassen, welche die Gesamtkraft bzw. die Position charakterisieren.

Insbesondere ist die Kraft, mit welcher das erste Objekt auf das zweite Objekt wirkt, eine Gewichtskraft. Im Falle einer Person, welche auf einem Sitz sitzt, muss dabei diese Kraft nicht unbedingt die Gewichtskraft der Person sein. Sie kann beispielsweise reduziert sein, wenn sich die Person an Objekten des Fahrzeugs außerhalb des Sitzes zusätzlich abstützt.

Insbesondere werden unterschiedlichen Sensoren unterschiedliche Aufgaben bei der Bereitstellung von Charakterisierungsdaten zugewiesen. Dadurch ist beispielsweise zumindest im gewissen Maße eine Parallelverarbeitung von Daten möglich.

Es kann vorgesehen sein, dass Sensoren unterschiedlich ausgebildet sind. Vorteilhaft ist es, wenn die Sensoren hardwaremäßig im Wesentlichen gleich ausgebildet sind. Die unterschiedliche Aufgabenteilung bei der Bereitstellung von Charakterisierungsdaten lässt sich durch entsprechende softwaremäßige Anpassung der jeweiligen Sensoren realisieren.

Ganz besonders vorteilhaft ist es, wenn eine Auswertungseinrichtung des Sensorsystems über Sensoren des Sensorsystems verteilt ist. Dies bedeutet, dass keine externe Auswertungseinrichtung (welche entsprechend montiert werden muss) vorhanden ist. Weiterhin sind dann alle Sensoren des Sensorsystems bezüglich ihrer äußeren Abmessungen und dergleichen gleich ausbildbar.

Insbesondere stellt dann die Auswertungseinrichtung (welche über die Sensoren verteilt ist) einer übergeordneten Einrichtung Charakterisierungsdaten bereit. Dadurch kann das erfindungsgemäße Sensorsystem direkt mit der übergeordneten Einrichtung kommunizieren, ohne dass beispielsweise eine dazwischenliegende Schnittstelleneinrichtung notwendig ist. Die übergeordnete Einrichtung kann die bereitgestellten Charakterisierungsdaten beispielsweise verarbeiten und/oder auswerten und/oder analysieren und/oder anzeigen usw.

Beispielsweise ist die übergeordnete Einrichtung eine Airbag-Steuerungseinrichtung. Das Sensorsystem kann dann dieser Airbag-Steuerungseinrichtung direkt die notwendigen Daten zur Airbag-Steuerung bereitstellen.

Günstig ist es, wenn die Sensoren des Sensorsystems jeweils eine Signalverarbeitungseinrichtung aufweisen. An dieser können Signale verarbeitet werden. Dadurch können den jeweiligen Sensoren entsprechende Aufgaben zugeordnet werden und den Sensoren des Sensorsystems kann eine entsprechende Aufgabenverteilung zugewiesen werden.

Insbesondere ist die Signalverarbeitungseinrichtung in oder an einem Sensorgehäuse angeordnet. Dadurch bildet die Kombination aus sensitivem Teil des Sensors und Auswertungseinrichtungsteil des Sensors eine Einheit, welche als Ganzes handhabbar und insbesondere als Ganzes montierbar ist.

Insbesondere sind die Sensoren des Sensorsystems mit mindestens einer Datenleitung verbunden. Dadurch können die entsprechenden Signale der Sensoren übertragen werden. Ferner ist es dadurch möglich, dass die Sensoren untereinander kommunizieren, um die Aufgabenverteilung bezüglich der Signalauswertung zu ermöglichen.

Günstig ist es, wenn die Sensoren des Sensorsystems mit einem Bussystem verbunden werden. Beispielsweise handelt es sich bei dem Bussystem um einen LIN-Bus. Dadurch lässt sich das Sensorsystem auf einfache Weise in eine übergeordnete Einheit wie beispielsweise in ein Fahrzeug einbinden.

Ganz besonders vorteilhaft ist es, wenn die Sensoren des Sensorsystems bezüglich der mindestens einen Datenleitung Leseberechtigung und/oder Schreibberechtigung haben. Sie können dadurch Signale von anderen Sensoren leisen, um eine Weiterverarbeitung dieser Signale zu ermöglichen. Dadurch ist eine Aufgabenverteilung möglich. Die Leseberechtigung ist insbesondere eine generelle Leseberechtigung, bei der die Sensoren alle Daten auf der mindestens einen Datenleitung lesen können. Durch eine Schreibberechtigung können die Sensoren Daten auf die Datenleitung ausgeben. Die Schreibberechtigung kann generell sein oder es kann sich um eine Schreibberechtigung auf Aufforderung handeln. Im letzteren Falle erhält der Sensor ein Freigabesignal, um Daten auf die mindestens eine Datenleitung schreiben zu können. Im Falle eines LIN-Bussystems wird das entsprechende Freigabesignal beispielsweise durch ein LIN-Bus-Steuergerät (Master) erteilt.

Günstigerweise weisen die Sensoren des Sensorsystems eine Schnittstelleneinrichtung zur Ankopplung an die mindestens eine Datenleitung auf. Dadurch ist neben dem Senden von Daten auch ein Empfangen von Daten von der mindestens einen Datenleitung möglich, um beispielsweise Aufgaben bei der Signalverarbeitung und Signalkombination durchführen zu können.

Günstig ist es, wenn die Schnittstelleneinrichtungen jeweils durch einen ersten Controller gebildet sind. Es lassen sich einem Sensor beispielsweise mehrere Adresse bezüglich der mindestens einen Datenleitung zuordnen. Eine Adresse erfasst beispielsweise den Sensor als Objekt, welches Messdaten bereitstellt, und eine weitere Adresse umfasst den Sensor, welcher eine bestimmte Aufgabe bei der Signalverarbeitung hat.

Ferner günstig ist es, wenn eine Signalverarbeitungseinrichtung des jeweiligen Sensors durch einen zweiten Controller gebildet wird. Durch den zweiten Controller lassen sich Signälverarbeitungsvorgänge durchführen.

Es ist ferner günstig, wenn den Sensoren des Sensorsystems jeweils eine definierte Verbundposition in dem Sensorsystem zugeordnet wird. Durch diese definierte Verbundposition wird beispielsweise die Aufgabe, welche der entsprechende Sensor bei der Auswertung der Sensorsignale des Sensorsystems durchzuführen hat, definiert.

Beispielsweise wird die Verbundposition durch eine Codierung charakterisiert. Die Codierung kann dazu beispielsweise in dem jeweiligen Sensor gespeichert werden. Der jeweilige Sensor weiß dann stets, welche Position er hat und gegebenenfalls dann auch welche Aufgaben er in dem Sensorsystem durchzuführen hat. Beispielsweise erfolgt die Codierung des jeweiligen Sensors durch eine Seriennummer des entsprechenden Sensors. Durch die Seriennummer lässt sich beispielsweise die Reihenfolge von Sensoren im Sensorsystem festlegen. Beispielsweise wird durch aufsteigende oder absteigende Seriennummern die Reihenfolge definiert. Beispielsweise kann die Position eines Sensors auch durch eine Steckercodierung vorgegeben werden oder durch einen definierten Versorgungsspannungswert, wenn unterschiedliche Versorgungsspannungen für unterschiedliche Sensoren vorgegeben werden.

Beispielsweise ist es auch möglich, die Position eines Sensors an einem Kabelbaum zu codieren.

Es ist beispielsweise auch möglich, dass die jeweilige Verbundposition durch einen Sensor ermittelt wird. Beispielsweise erfolgt die Ermittlung beim Hochfahren des Systems. Der Sensor kann beispielsweise seine Verbundposition durch Bestimmung der Kabellänge bis zu dem Kopplungspunkt an die mindestens eine Datenlänge ermitteln oder auch durch eine Steckercodierung eines Steckers ermitteln, wobei der Sensor dann über den Stecker mit der mindestens einen Datenleitung verbunden ist.

Insbesondere ist das zweite Objekt ein Sitz und insbesondere ein Fahrzeugsitz. Durch das erfindungsgemäße Verfahren lassen sich Gewichtscharakterisierungsdaten und/oder Positionierungscharakterisierungsdaten eines Fahrzeuginsassen bereitstellen. Das erste Objekt ist dann ein Sitzinsasse.

Günstig ist es, wenn die Gewichtscharakterisierungsdaten und/oder Positionscharakterisierungsdaten durch das Sensorsystem einer Airbag-Steuerungs-einrichtung bereitgestellt werden. Diese kann dann unter Zuhilfenahme der entsprechenden Charakterisierungsdaten entscheiden, in welchem Umfang bei einem Kollisionsfall der Airbag aufgeblasen werden soll.

Die Aufgaben, welche von dem Sensoren durchgeführt werden, können beispielsweise umfassen: Einlesen von Messsignalen, Vorfiltern von Messsignalen, Berechnungsverfahren an Messsignalen und/oder bearbeiteten Messsignalen, Klassifizierung von Daten, Fehleranalyse, Fehlerausgabe, Diagnosebetrieb. Unterschiedliche Aufgaben können dabei auf unterschiedliche Sensoren verteilt sein.

Es kann vorgesehen sein, dass einem ersten Sensor mindestens eine bestimmte Signalverarbeitungsaufgabe zugewiesen wird und mindestens ein weiterer Sensor diese mindestens eine bestimmte Signalverarbeitungsaufgabe ebenfalls ausführt, um eine Überprüfung des ersten Sensors zu ermöglichen. Es können dabei die Ergebnisse der Signalverarbeitungsaufgabe, welche durch den ersten Sensor und den mindestens einen weiteren Sensor erhalten werden, verglichen werden. Eine Abweichung kann ein Fehlersignal generieren. Beispielsweise ist es möglich, dass jedem Sensor mindestens eine bestimmte Signalverarbeitungsaufgabe zugewiesen wird, welche eine Teilaufgabe bei der Bereitstellung von Charakterisierungsdaten ist. Zusätzlich zu der zugewiesenen Aufgabe werden an dem entsprechenden Sensor weitere Signalverarbeitungsaufgaben und insbesondere alle restlichen Signalverarbeitungsaufgaben durchgeführt. Dadurch ist ein umfassender Vergleich zwischen den Sensoren möglich und Sensorprobleme lassen sich umgehend erkennen.

Bei einem Ausführungsbeispiel ist es vorgesehen, dass beim Ausfall eines Sensors dessen Signalverarbeitungsaufgaben von einem oder mehreren anderen Sensoren übernommen werden. Dadurch lässt sich der Ausfall kompensieren.

Es ist dann besonders vorteilhaft, wenn der ausgefallene Sensor durch einen oder mehrere weitere Sensoren simuliert wird. Ein entsprechendes Verfahren ist in der nicht vorveröffentlichten europäischen Patentanmeldung Nr. 07 101 282.7 vom 26. Januar 2007 des gleichen Anmelders beschrieben. Durch hardwaremäßig realisierte Sensoren werden Mess-Sensorsignale bereitgestellt. Es wird mindestens ein virtueller Sensor simuliert und es werden virtuelle Signale bereitgestellt. Die virtuellen Sensorsignale werden unter Verwendung der Messsignale eines oder mehrerer hardwaremäßig realisierter Sensoren berechnet und sind simulierte Messsignale. Der virtuelle Sensor tritt dabei an die Stelle eines realen Sensors. Durch die Simulation eines ausgefallenen Sensors durch einen oder mehrere andere Sensoren und durch die Aufgabenumverteilung lässt sich auch bei Ausfall eines (oder ggf. mehrerer Sensoren) die Funktionsfähigkeit des Sensorsystems sicherstellen.

Die eingangs genannte Aufgabe wird bei dem erfindungsgemäßen Sensorsystem dadurch gelöst, dass eine Mehrzahl von beabstandeten Sensoren zur Kraftmessung vorgesehen sind, welche an dem zweiten Objekt angeordnet sind, mindestens eine Datenleitung vorgesehen ist, mit welcher die Sensoren verbunden sind, und eine Auswertungseinrichtung vorgesehen ist, welche Charakterisierungsdaten bereitstellt, wobei die Auswertungseinrichtung verteilt über die Sensoren an den Sensoren angeordnet ist.

Das erfindungsgemäße Sensorsystem weist die bereits im Zusammenhang mit dem erfindungsgemäßen Verfahren erläuterten Vorteile auf.

Weitere vorteilhafte Ausführungsformen des erfindungsgemäßen Sensorsystems wurde bereits im Zusammenhang mit dem erfindungsgemäßen Verfahren erläutert.

Insbesondere weist die Auswertungseinrichtung Signalverarbeitungseinrichtungen auf, welche jeweils an den Sensoren angeordnet sind. Die Signalverarbeitungseinrichtungen sind Teile der Auswertungseinrichtungen, wobei die Signalverarbeitungseinrichtungen direkt den jeweiligen Sensoren zugeordnet sind.

Insbesondere sind die jeweiligen Signalverarbeitungseinrichtungen an oder in einem Sensorgehäuse der entsprechenden Sensoren angeordnet. Dadurch bilden die Sensoren mit dem jeweiligen Teil der Auswertungseinrichtung eine als Ganzes handhabbare Einheit. Dies erleichtert die Montage.

Es kann vorgesehen sein, dass die jeweiligen Sensoren einen ersten Controller für den Datenverkehr mit der mindestens einen Datenleitung aufweisen und einen zweiten Controller zur Signalverarbeitung aufweisen.

Insbesondere ist die mindestens eine Datenleitung von einem Bussystem wie einem Feldbussystem umfasst. Beispielsweise ist das Bussystem ein LIN-Bus. Dadurch lässt sich das Sensorsystem auf einfache Weise an ein übergeordnetes System ankoppeln.

Das erfindungsgemäße Verfahren und das erfindungsgemäße Sensorsystem lässt sich auf vorteilhafte Weise zu Ermittlung von Charakterisierungsdaten für eine Person auf einem Fahrzeugsitz verwenden. Insbesondere lassen sich Steuerungsdaten für einen Airbag bereitstellen.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung eines Ausführungsbeispiels eines erfindungsgemäßen Sensorsystems, welches an einem Fahrzeugsitz montiert ist; und
- Figur 2: eine Blockschaltbild-Darstellung eines Ausführungsbeispiels eines erfindungsgemäßen Sensorsystems.

Es wird ein Sensorsystem bereitgestellt, mittels welchem sich die Kraft, mit welcher ein erstes Objekt auf ein zweites Objekt wirkt, charakterisieren lässt. Alternativ oder zusätzlich lässt sich die relative Position des ersten Objekts zu dem zweiten Objekt, wenn das erste Objekt auf das zweite Objekt eine Kraft ausübt, charakterisieren. Das erste Objekt wirkt insbesondere mit einem ausgedehnten Bereich auf einen ausgedehnten Bereich des zweiten Objekts.

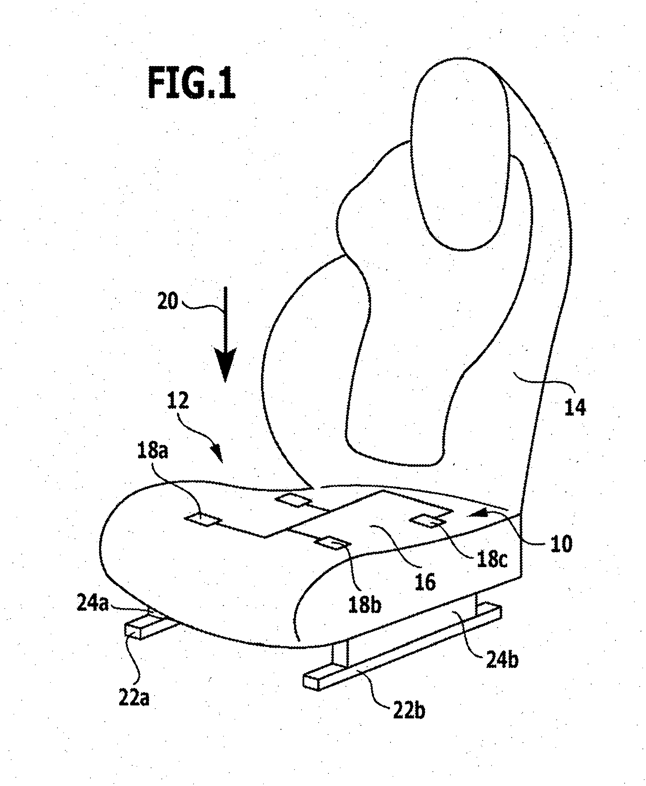

Bei einem Ausführungsbeispiel, welches in Figur 1 schematisch gezeigt ist, ist ein Sensorsystem 10 an einem Sitz 12 und insbesondere Fahrzeugsitz montiert. Der Sitz 12 umfasst einen Rückenlehnenbereich 14 und einen Sitzflächenbereich 16.

Das Sensorsystem 10 weist eine Mehrzahl von beabstandeten Sensoren 18a, 18b, 18c usw. auf. Bei den Sensoren handelt es sich um solche, die Kraftmesssignale bereitstellen können bzw. verarbeiten können. Beispielsweise handelt es sich um Kraftsensoren, die direkt Kräfte messen können. Es ist grundsätzlich auch möglich, dass die Sensoren 18a, 18b, 18c indirekt Kräfte messen können, indem beispielsweise Drücke gemessen werden und aus den Drücken die wirkenden Kräfte abgeleitet werden.

Die Sensoren 18a, 18b, 18c usw. des Sensorsystems 10 sind an dem Sitzflächenbereich 16 angeordnet, welcher das zweite Objekt bildet. Eine Person, welche auf dem Sitz.12 sitzt und mit ihrer Gewichtskraft 20 auf den Sitzflächenbereich 16 wirkt, bildet das erste Objekt. Die Gewichtskraft 20 muss dabei nicht vollständig das Gewicht der Person charakterisieren. Sie kann kleiner sein als eine dem Gewicht der Person entsprechende Gewichtskraft, wenn sich die Person zusätzlich außerhalb des Sitzes abstützt.

Der Sitz 12 ist an dem Fahrzeug montiert. Dazu sind beispielsweise untere Sitzschienen 22a, 22b fest an einem Fahrzeugboden montiert. Der Sitz 12 selber weist obere Sitzschienen 24a, 24b auf, welche fest an dem Sitz 12 und insbesondere bezüglich des Sitzflächenbereichs 16 verankert sind. Die oberen Sitzschienen 24a und 24b sind an den zugeordneten unteren Sitzschienen 22a, 22b fixiert. Die Fixierung kann dabei über Sensoren 18a, 18b, 18c usw. erfolgen. Dazu weisen die entsprechenden Sensoren einen ersten Teil auf, welcher an der jeweiligen unteren Sitzschiene fixiert ist, und einen zweiten Teil, welcher an der jeweiligen oberen Sitzschiene fixiert ist. Der erste Teil und der zweite Teil der jeweiligen Sensoren sind relativ zueinander beweglich bzw. auslenkbar. Aus der Bewegung bzw. Auslegung kann dann die an der entsprechenden Stelle wirkende Kraft ermittelt werden.

Es ist grundsätzlich auch möglich, dass die Sensoren 18a, 18b, 18c usw. des Sensorsystems 10 innerhalb des Sitzflächenbereichs 16 angeordnet sind. Beispielsweise ist eine entsprechende Sensorsystem-Matte in den Sitzflächenbereich 16 integriert.

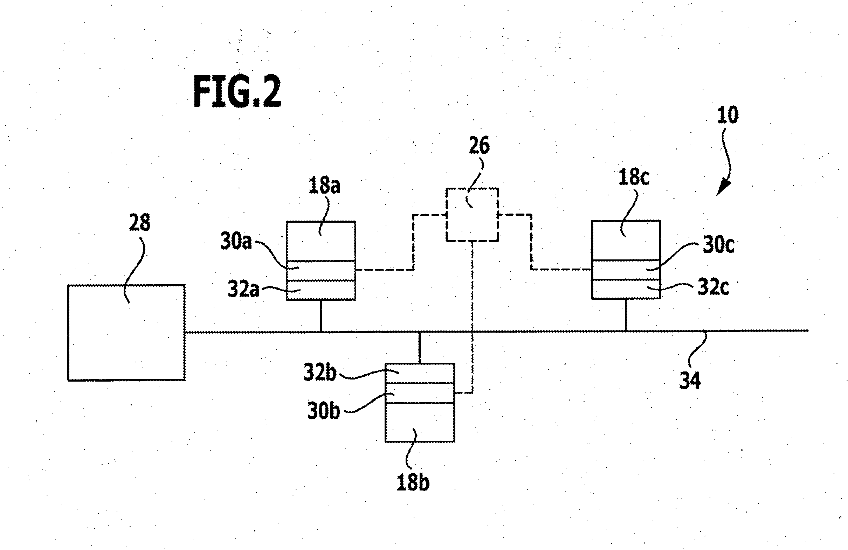

Die Sensoren 18a, 18b, 18c usw. des Sensorsystems 10 umfassen eine Auswertungseinrichtung, welche als Ganzes mit 26 bezeichnet ist (Figur 2).,Diese Auswertungseinrichtung 26 stellt Charakterisierungsdaten für die Kraft, mit welcher das erste Objekt auf das zweite Objekt wirkt, und/oder Charakterisierungsdaten für die Position des ersten Objekts an dem zweiten Objekt, bereit, welche durch eine übergeordnete Einrichtung 28 verarbeitbar und insbesondere direkt verarbeitbar sind. Die übergeordnete Einrichtung 28 ist beispielsweise im Falle der Gewichtsdatenermittlung für einen Sitzinsassen an dem Sitz 12 eine Airbag-Steuerungseinrichtung, über welche die Aufblasungs-charakteristiken eines Airbags, welcher dem Sitz 12 zugeordnet ist, steuerbar ist.

Die Auswertungseinrichtung 26 ist keine von den Sensoren 18a, 18b, 18c usw. des Sensorsystems 10 getrennte Einheit, sondern in diese Sensoren integriert und dabei über die Sensoren 18a, 18b, 18c usw. verteilt. Die jeweiligen Sensoren 18a, 18b, 18c usw. umfassen damit jeweilige Teile der Auswertungseinrichtung 26. (In Figur 2 ist die Auswertungseinrichtung 26 deshalb in durchbrochenen Linien angedeutet; sie ist keine Vorrichtung, welche außerhalb der Sensoren 18a, 18b, 18c usw. liegt.)

Die jeweiligen Sensoren 18a, 18b, 18c usw. umfassen jeweils eine Signalverarbeitungseinrichtung 30a, 30b, 30c usw. Diese Signalverarbeitungseinrichtungen 30a, 30b, 30c usw. sind Teil der Auswertungseinrichtung 26. Die Signalverarbeitungseinrichtungen 30a, 30b, 30c usw. sind direkt an den zugeordneten Sensoren 18a, 18b, 18c usw. angeordnet. Sie sind beispielsweise innerhalb eines Sensorgehäuses angeordnet oder relativ zu einem Sensorgehäuse in einem eigenen Gehäuse fixiert.

Die Sensoren 18a, 18b, 18c usw. umfassen ferner jeweilige Schnittstelleneinrichtungen 32a, 32b, 32c usw., über welche der Datenverkehr mit mindestens einer Datenleitung 34 durchführbar ist. Die mindestens eine Datenleitung 34 ist insbesondere Teil eines Bussystems und insbesondere Feldbussystems. Beispielsweise sind die Sensoren 18a, 18b, 18c des Sensorsystems 10 mit einem LIN-Bus verbunden. Ein LIN-Bus (LIN - Local Interconnect Network) setzt sich aus einem LIN-Master und einem oder mehreren LIN-Slaves zusammen. Der LIN-Master hat Kenntnis über die zeitliche Reihenfolge aller zu übertragenen Daten. Diese Daten werden von den entsprechenden LIN-Slaves übertragen, wenn sie dazu vom LIN-Master aufgefordert werden. Zu einem LIN-Bus gehört ein LIN-Protokoll.

Der LIN-Master ist ein Steuergerät des LIN-Buses. Er wird auch als ECU (Electronic Control Unit) bezeichnet. Beispielsweise ist eine Airbag-Steuerungseinrichtung als ECU und damit Master des entsprechenden LIN-Buses ausgebildet.

Die Sensoren 18a, 18b, 18c usw. des Sensorsystems 10 haben sowohl Master-Aufgaben als auch Slave-Aufgaben. Die Sensoren 18a, 18b, 18c können Daten auf die mindestens eine Datenleitung 34 senden und Daten von dieser empfangen. Jeder Sensor 18a, 18b, 18c usw. hat Leseberechtigung bezüglich der mindestens einen Datenleitung.

Die Sensoren 18a, 18b, 18c usw. des Sensorsystems 10 haben auch Schreibberechtigung, um Daten auf die mindestens eine Datenleitung 34 senden zu können. Es ist dabei grundsätzlich möglich, dass die Sensoren des Sensorsystems generelle Schreibberechtigung haben und dabei ohne zusätzliche Aufforderung alle ausgewählten Daten auf die mindestens eine Datenleitung 34 senden können. Es kann beispielsweise auch vorgesehen sein, dass die Sensoren des Sensorsystems 10 eine Schreibberechtigung nur auf Aufforderung haben; ein Sensor 18a, 18b, 18c usw. muss zunächst ein Freigabesignal erhalten, um Daten auf die mindestens eine Datenleitung 34 übertragen zu können. Dies ist beispielsweise der Fall, wenn das Sensorsystem 10 an einen LIN-Bus angeschlossen ist. Ein Steuergerät (ECU) des LIN-Buses stellt dann entsprechende Freigabesignale bereit.

Jedem Sensor 18a, 18b, 18c usw. ist eine bestimmte Position im Verbund (dem Sensorsystem 10) zugeordnet. Die entsprechende Position im Verbund ist beispielsweise durch eine Codierung charakterisiert, welche an dem Sensor 18a, 18b, 18c usw. gespeichert ist.

Es ist beispielsweise alternativ oder auch zusätzlich möglich, dass ein entsprechender Sensor 18a, 18b, 18c usw. seine Position im Verbund selber ermittelt, beispielsweise über eine Steckercharakterisierung eines Steckers, mittels welchem er mit der Datenleitung 34 verbunden ist, oder über Ermittlung der Kabellänge zu einem Kopplungspunkt, an welchem der entsprechende Sensor mit der mindestens einen Datenleitung 34 verbunden ist.

Die Auswertungseinrichtung ist über das Sensorsystem 10 verteilt. Die Sensoren 18a, 18b, 18c weisen verschiedene Aufgaben zur Bereitstellung von Charakterisierungsdaten auf. Unterschiedliche Sensoren können dabei unterschiedliche Aufgaben aufweisen.

Bei einer vorteilhaften Ausführungsform sind die Sensoren 18a, 18b, 18c usw. hardwaremäßig grundsätzlich gleich ausgebildet. Die Durchführung unterschiedlicher Aufgaben an den jeweiligen Signalverarbeitungseinrichtungen 30a, 30b, 30c usw. wird softwaremäßig gesteuert.

Die jeweiligen Sensoren 18a, 18b, 18c usw. weisen jeweils einen ersten Controller auf, welcher die jeweilige Schnittstelleneinrichtung 32a, 32b, 32c bildet, und einen zweiten Controller, welcher die Signalverarbeitungseinrichtung 30a, 30b, 30c bildet.

Durch die Aufteilung der Aufgaben zur Kraftcharakterisierung und/oder Positionscharakterisierung auf die Sensoren 18a, 18b, 18c usw. sind diese grundsätzlich gleich ausgebildet. Es ist dabei möglich, dass die Aufgabenverteilung zeitlich geändert wird. Dadurch erhält man eine hohe Redundanz des Systems.

Die Sensoren 18a, 18b, 18c mit den jeweiligen Signalverarbeitungseinrichtungen 30a, 30b, 30c erfassen Messsignale, welche Teilkräfte auf den Sitz 12 charakterisieren. Die Messsignale werden in die Signalverarbeitungseinrichtungen 30ä, 30b, 30c usw. eingelesen, wobei eine Vorfilterung erfolgen kann.

Es erfolgen dann Auswertungsvorgänge und insbesondere Berechnungsvorgänge. Beispielsweise kann es vorgegehen sein, dass ein Sensor an einer Position, an welcher hardwaremäßg kein Sensor angeordnet ist, durch auf anderen Positionen vorhandene Sensoren simuliert wird. Aus den Messsignalen der anderen Sensoren wird ein virtuelles Messsignal des simulierten virtuellen Sensors berechnet. Dieses virtuelle Messsignal kann dann weiterverarbeitet werden wie ein Messsignal eines tatsächlichen, hardwaremäßig realisierten Sensors. Das Verfahren der Simulation eines virtuellen Sensors über Messsignale von tatsächlichen Sensoren ist in der nicht vorveröffentlichten europäischen Anmeldung Nr. 07 101 282.7 vom 26. Januar 2007 des gleichen Anmelders beschrieben. Auf diese Anmeldung wird ausdrücklich Bezug genommen.

Die Signalverarbeitungseinrichtungen 30a, 30b, 30c führen weitere Verarbeitungsprozesse durch. Beispielsweise erfolgt eine Schwerpunktermittlung oder eine Summierung von Messsignalen (gegebenenfalls unter Hinzuziehung von virtuellen Sensorsignalen).

Es kann eine weitere Filterung durchgeführt werden, um beispielsweise eine Plausibilitätsprüfung für ein erzeugtes Summensignal oder Schwerpunktsignal durchzuführen.

Weiterhin kann durch die Auswertungseinrichtung 26 eine Klasserieinteilung durchgeführt werden und auch eine Fehleranalyse bzw. Fehlerausgabe durchgeführt werden. Beispielsweise werden Gewichtsdaten in Klassen eingeteilt, wobei die Klassen in einer Menge enthalten sind, welche eine endliche Anzahl von Elementen aufweist.

Die oben erläuterten unterschiedlichen Aufgaben zur Bereitstellung von Charakterisierungsdaten werden erfindungsgemäß aufgeteilt und an unterschiedlichen Sensoren 18a, 18b, 18c usw. durchgeführt. Beispielsweise erfolgt das Einlesen von Messdaten an allen Sensoren 18a, 18b, 18c usw. Berechnungen können dann an unterschiedlichen Signalverarbeitungseinrichtungen 30a, 30b, 30c usw. durchgeführt werden. Beispielsweise führen unterschiedliche Signalverarbeitungseinrichtungen unterschiedliche Berechnungsarten durch. An einer weiteren Signalverarbeitungseinrichtung (welche beispielsweise keine, Berechnungen durchgeführt hat) können dann Klasseneinteilungsberechnungen durchgeführt werden.

Es ist dabei grundsätzlich möglich, dass jeder Sensor 18a, 18b, 18c usw. mehrere Adressen bezüglich eines Bussystems aufweist. Eine Adresse ist dem Sensor als Messsensor zugeordnet, welcher Messsignale bereitstellt, und eine weitere Adresse ist der entsprechenden Signalverarbeitungseinrichtung des Sensors zugeordnet.

Den Sensoren 18a, 18b, 18c im Verbund des Sensorsystems 10 sind unterschiedliche Aufgaben zugeteilt, wobei der Datenaustausch auch zwischen Sensoren über die mindestens eine Datenleitung 34 erfolgt.

Die Sensoren 18a, 18b, 18c usw. üben zusätzlich zu der Messung (die grundsätzlich unterschiedliche Ergebnisse liefern kann, da die Sensoren 18a, 18b, 18c usw. an unterschiedlichen Positionen bezüglich des zweiten Objekts angeordnet sind) auch unterschiedliche Software-Funktionen bezüglich der Signalverarbeitung aus.

Durch die erfindungsgemäße Lösung lässt sich ein Sensorsystem mit hoher Redundanz und damit auch mit hoher Ausfallsicherheit realisieren. Ferner ist es durch die erfindungsgemäße Lösung möglich, das Sensorsystem mit hoher Sicherheit auf Fehler zu überwachen.

Beispielsweise ist es vorgesehen, dass jeder Sensor 18a, 18b, 18c usw. des Sensorsystems 10 bestimmte Aufgaben der Bereitstellung von Charakterisierungsdaten hat. Es ist dabei jedoch möglich, dass jeder Sensor neben den ihm direkt zugewiesenen Aufgaben noch weitere Aufgaben "im Hintergrund" und beispielsweise alle möglichen Aufgaben durchführt. Dadurch ist es möglich, die Ergebnisse, die ein bestimmter Sensor bezüglich der ihn zugewiesenen Aufgaben bereitstellt, durch einen oder mehrere andere Sensoren zu überprüfen. Dadurch lassen sich Fehler im Sensorsystem und insbesondere Ausfälle eines Sensors schnell und sicher erkennen.

Beispielsweise ist es insbesondere durch Umverteilung von Aufgaben auch möglich, zumindest für einen bestimmten Zeitraum den Ausfall eines Sensors zu kompensieren. Wenn festgestellt wird, dass ein Sensor ausgefallen ist, dann können dessen Aufgaben durch andere Sensoren übernommen werden. Insbesondere wird der ausgefallene Sensor durch eine virtuellen Sensor bezüglich Messsignalen simuliert, wie in der vorveröffentlichten europäischen Anmeldung Nr. 07 101 282.7 vom 26. Januar 2007 beschrieben. Einem oder mehreren der verbleibenden (nicht ausgefallenen) Sensoren werden weiterhin die Signalverarbeitungsaufgaben (zur Bereitstellung von Charakterisierungsdaten) des ausgefallenen Sensors zugewiesen.

Beispielsweise wird, wenn ein Sensor ausfällt, ein Warnsignal an dem Fahrzeug abgegeben. Durch die erfindungsgemäße Lösung lässt sich jedoch ein Weiterbetrieb des Sensorsystems realisieren, zumindest für einen bestimmten Zeitraum, wenn der ausgefallene Sensor durch die anderen Sensoren simuliert wird und die Aufgaben des ausgefallenen Sensors auf die verbleibenden Sensoren neu aufgeteilt werden. (Die Aufgabenübernahme durch die anderen Sensoren sollte dazu softwaremäßig bereits vorinstalliert sein.)

## Patentansprüche

1. Verfahren zur Charakterisierung der Kraft, mit welcher ein erstes Objekt auf ein zweites als Fahrzeugsitz realisiertes Objekt wirkt, und/oder der Position des ersten Objekts am zweiten Objekt, bei dem durch ein Sensorsystem, welches eine Mehrzahl von beabstandeten Sensoren zur Kraftmessung umfasst, die an dem zweiten Objekt angeordnet sind, Messsignale bereitgestellt werden, an den Sensoren eine Signalverarbeitung erfolgt, und das Sensorsystem Charakterisierungsdaten bereitstellt, wobei die Signalverarbeitungsaufgaben zur Bereitstellung der Charakterisierungsdaten auf die Sensoren des Sensorsystems verteilt werden, und wobei die Signalverarbeitungsaufgaben mindestens eine der Aufgaben Berechnungsverfahren an Messsignalen und/oder bearbeiteten Messsignalen, Klasseneinteilung von Daten zur Kraftcharakterisierung und/oder Positionscharakterisierung, Fehleranalyse, Fehlerausgabe, Diagnosebetrieb umfassen.

2. Verfahren nach Anspruch 1, **dadurch gekennzeichnet, dass** die Kraft, mit welcher das erste Objekt auf das zweite Objekt wirkt, eine Gewichtskraft ist.

3. Verfahren nach einem der vorangehenden Ansprüche, **dadurch gekennzeichnet, dass** unterschiedlichen Sensoren unterschiedliche Aufgaben bei der Bereitstellung von Charakterisierungsdaten zugewiesen werden.

4. Verfahren nach einem der vorangehenden Ansprüche, **dadurch gekennzeichnet, dass** eine Auswertungseinrichtung des Sensorsystems über Sensoren des Sensorsystems aufgeteilt wird und insbesondere, dass die Auswertungseinrichtung einer übergeordneten Einrichtung Charakterisierungsdaten bereitstellt.

5. Verfahren nach einem der vorangehenden Ansprüche, **dadurch gekennzeichnet, dass** die Sensoren des Sensorsystems jeweils eine Signalverarbeitungseinrichtung aufweisen und insbesondere, dass die Signalverarbeitungseinrichtung in oder an einem Sensorgehäuse angeordnet ist.

6. Verfahren nach einem der vorangehenden Ansprüche, **dadurch gekennzeichnet, dass** die Sensoren des Sensorsystems mit mindestens einer Datenleitung verbunden sind, insbesondere, dass die Sensoren des Sensorsystems mit einem Bussystem verbunden sind, insbesondere, dass das Bussystem ein LIN-Bus ist, insbesondere, dass die Sensoren des Sensorsystems bezüglich der mindestens einen Datenleitung Leseberechtigung und/oder Schreibberechtigung haben, insbesondere, dass die Sensoren des Sensorsystems eine Schnittstelleneinrichtung zur Ankopplung an die mindestens eine Datenleitung aufweisen, insbesondere, dass die Schnittstelleneinrichtung durch einen ersten Controller gebildet wird, insbesondere, dass eine Signalverarbeitungseinrichtung des jeweiligen Sensors durch einen zweiten Controller gebildet wird.

7. Verfahren nach einem der vorangehenden Ansprüche, **dadurch gekennzeichnet, dass** den Sensoren des Sensorsystems jeweils eine definierte Verbundposition zugeordnet wird, insbesondere, dass die Verbundposition durch eine Codierung charakterisiert wird, insbesondere, dass die Codierung in dem jeweiligen Sensor gespeichert wird und insbesondere, dass die jeweilige Verbundposition durch einen Sensor ermittelt wird.

8. Verfahren nach einem der vorangehenden Ansprüche, **dadurch gekennzeichnet, dass** Gewichtscharakterisierungsdaten und/oder Positions-charakterisierungsdaten durch das Sensorsystem einer Airbag-Steuerungseinrichtung bereitgestellt werden.

9. Verfahren nach einem der vorangehenden Ansprüche, **dadurch gekennzeichnet, dass** einem ersten Sensor mindestens eine bestimmte Signalverarbeitungsaufgabe zugewiesen wird und mindestens ein weiterer Sensor diese mindestens eine bestimmte Signalverarbeitungsaufgabe ebenfalls ausführt, um eine Überprüfung des ersten Sensors zu ermöglichen.

10. Verfahren nach einem der vorangehenden Ansprüche, **dadurch gekennzeichnet, dass** bei einem Ausfall eines Sensors dessen Signalverarbeitungsaufgaben durch einen oder mehrere andere Sensoren übernommen werden und insbesondere, dass der ausgefallene Sensor durch einen oder mehrere Sensoren simuliert wird.

11. Sensorsystem zur Charakterisierung der Kraft, mit welcher ein erstes Objekt auf ein zweites als Fahrzeugsitz realisiertes Objekt (12) wirkt, und/oder der Position des ersten Objekts an dem zweiten Objekt (12), umfassend eine Mehrzahl von beabstandeten Sensoren (18a, 18b, 18c) zur Kraftmessung, welche an dem zweiten Objekt (12) angeordnet sind, mindestens eine Datenleitung (34), mit welcher die Sensoren (18a, 18b, 18c) verbunden sind, und eine Auswertungseinrichtung (26), welche Charakterisierungsdaten bereitstellt, wobei die Auswertungseinrichtung (26) verteilt über die Sensoren (18a, 18b, 18c) an den Sensoren (18a, 18b, 18c) angeordnet ist, und wobei die Signalverarbeitungsaufgaben mindestens eine der Aufgaben Berechnungsverfahren an Messsignalen und/oder bearbeiteten Messsignalen, Klasseneinteilung von Daten zur Kraftcharakterisierung und/oder Positionscharakterisierung, Fehleranalyse, Fehlerausgabe, Diagnosebetrieb umfassen.

12. Sensorsystem nach Anspruch 11, **dadurch gekennzeichnet, dass** die Auswertungseinrichtung (26) Signalverarbeitungseinrichtungen (30a, 30b, 30c) aufweist, welche jeweils an den Sensoren (18a, 18b, 18c) angeordnet sind, und insbesondere, dass die jeweiligen Signalver-arbeitungseinrichtungen (30a, 30b, 30c) an oder in einem Sensorgehäuse des entsprechenden Sensors (18a, 18b, 18c) angeordnet sind.

13. Sensorsystem nach Anspruch 11 oder 12, **dadurch gekennzeichnet, dass** ein jeweiliger Sensor (18a; 18b; 18c) einen ersten Controller für den Datenverkehr mit der mindestens einen Datenleitung (34) aufweist und einen zweiten Controller zur Signalverarbeitung aufweist.

14. Sensorsystem nach einem der Ansprüche 11 bis 13, **dadurch gekennzeichnet, dass** die mindestens eine Datenleitung (34) von einem Bussystem umfasst ist, insbesondere, dass das Bussystem ein Feldbussystem ist, und insbesondere, dass das Bussystem ein LIN-Bus ist.

15. Verwendung des Verfahrens gemäß einem der Ansprüche 1 bis 10 und des Sensorsystems gemäß einem der Ansprüche 11 bis 14 zur Ermittlung von Charakterisierungsdaten für eine Person auf einem Fahrzeugsitz, und insbesondere zur Bereitstellung von Steuerungsdaten für einen Airbag.

## Claims

1. Method for characterizing the force with which a first object acts on a second object implemented as vehicle seat and/or the position of the first object on the second object, wherein measurement signals are provided by a sensor system comprising a plurality of spaced sensors for measuring force, which are arranged on the second object, signal processing takes place at the sensors, and the sensor system provides characterization data, wherein the signal processing tasks for providing the characterization data are distributed among the sensors of the sensor system, and wherein the signal processing tasks comprise at least one of the tasks calculation procedures on measurement signals and/or processed measurement signals, classification of data for force characterization and/or position characterization, error analysis, error output, diagnostic operation.

2. Method in accordance with claim 1, **characterized in that** the force with which the first object acts on the second object is a weight force.

3. Method in accordance with any one of the preceding claims, **characterized in that** different tasks for providing characterization data are assigned to different sensors.

4. Method in accordance with any one of the preceding claims, **characterized in that** an evaluating device of the sensor system is distributed over sensors of the sensor system, and, in particular, **in that** the evaluating device provides a superordinate device with characterization data.

5. Method in accordance with any one of the preceding claims, **characterized in that** the sensors of the sensor system each comprise a signal processing device, and, in particular, **in that** the signal processing device is arranged in or on a sensor housing.

6. Method in accordance with any one of the preceding claims, **characterized in that** the sensors of the sensor system are connected to at least one data line, in particular, **in that** the sensors of the sensor system are connected to a bus system, in particular, **in that** the bus system is a LIN bus, in particular, **in that** the sensors of the sensor system have read access and/or write access to the at least one data line, in particular, **in that** the sensors of the sensor system comprise an interface device for coupling to the at least one data line, in particular, **in that** the interface device is formed by a first controller, in particular, **in that** a signal processing device of the respective sensor is formed by a second controller.

7. Method in accordance with any one of the preceding claims, **characterized in that** a defined system position is allocated to each of the sensors of the sensor system, in particular, **in that** the system position is **characterized by** a coding, in particular, in that the coding is stored in the respective sensor, and, in particular, in that the respective system position is determined by a sensor.

8. Method in accordance with any one of the preceding claims, **characterized in that** weight characterization data and/or position characterization data are provided by the sensor system to an airbag control device.

9. Method in accordance with any one of the preceding claims, **characterized in that** at least one certain signal processing task is assigned to a first sensor, and at least one further sensor also performs this at least one certain signal processing task so as to enable checking of the first sensor.

10. Method in accordance with any one of the preceding claims, **characterized in that** in the event of failure of a sensor, its signal processing tasks are assumed by one or more other sensors, and in particular, **in that** the failed sensor is simulated by one or more sensors.

11. Sensor system for characterizing the force with which a first object acts on a second object (12) implemented as vehicle seat and/or the position of the first object on the second object (12), comprising a plurality of spaced sensors (18a, 18b, 18c) for measuring force, which are arranged on the second object (12), at least one data line (34) to which the sensors (18a, 18b, 18c) are connected, and an evaluating device (26) which provides characterization data, wherein the evaluating device (26) is arranged on the sensors (18a, 18b, 18c) and distributed over the sensors (18a, 18b, 18c), and wherein the signal processing tasks comprise at least one of the tasks calculation procedures on measurement signals and/or processed measurement signals, classification of data for force characterization and/or position characterization, error analysis, error output, diagnostic operation.

12. Sensor system in accordance with claim 11, **characterized in that** the evaluating device (26) comprises signal processing devices (30a, 30b, 30c) which are respectively arranged on the sensors (18a, 18b, 18c), and in particular, **in that** the respective signal processing devices (30a, 30b, 30c) are arranged on or in a sensor housing of the corresponding sensor (18a, 18b, 18c).

13. Sensor system in accordance with claim 11 or 12, **characterized in that** a respective sensor (18a; 18b; 18c) comprises a first controller for data communication with the at least one data line (34), and a second controller for signal processing.

14. Sensor system in accordance with any one of claims 11 to 13, **characterized in that** the at least one data line (34) forms part of a bus system, in particular, **in that** the bus system is a field bus system, and, in particular, **in that** the bus system is a LIN bus.

15. Use of the method in accordance with any one of claims 1 to 10 and of the sensor system in accordance with any one of claims 11 to 14 for determining characterization data for a person on a vehicle seat, and, in particular, for providing control data for an airbag.

## Revendications

1. Procédé de caractérisation de la force avec laquelle un premier objet agit sur un deuxième objet réalisé sous la forme d'un siège de véhicule, et/ou de la position du premier objet sur le deuxième objet, procédé selon lequel on produit des signaux de mesure par un système de capteurs, qui comprend une pluralité de capteurs pour la mesure de force, espacés les uns des autres et agencés sur le deuxième objet, selon lequel on effectue un traitement de signal au niveau des capteurs, et selon lequel le système de capteurs produit des données de caractérisation, les tâches de traitement de signal pour la production des données de caractérisation étant réparties sur les capteurs du système de capteurs, et les tâches de traitement de signal englobant au moins l'une des tâches suivantes, à savoir des processus de calcul sur des signaux de mesure et/ou le traitement de signaux de mesure, la répartition en classes de données destinées à la caractérisation de force et/ou à la caractérisation de position, l'analyse d'erreurs, l'indication d'erreurs, la fonction de diagnostic.

2. Procédé selon la revendication 1, **caractérisé en ce que** la force avec laquelle le premier objet agit sur le deuxième objet est une force de poids.

3. Procédé selon l'une des revendications précédentes, **caractérisé en ce que** l'on affecte à des capteurs différents, des tâches différentes lors de la production de données de caractérisation.

4. Procédé selon l'une des revendications précédentes, **caractérisé en ce qu'**un dispositif d'exploitation de données du système de capteurs est réparti sur des capteurs du système de capteurs, et notamment **en ce que** le dispositif d'exploitation de données fournit des données de caractérisation à un dispositif hiérarchiquement supérieur.

5. Procédé selon l'une des revendications précédentes, **caractérisé en ce que** les capteurs du système de capteurs présentent respectivement un dispositif de traitement de signal, et notamment **en ce que** le dispositif de traitement de signal est agencé dans ou sur le boitier de capteur.

6. Procédé selon l'une des revendications précédentes, **caractérisé en ce que** les capteurs du système de capteurs sont reliés à au moins une ligne de transmission de données, notamment **en ce que** les capteurs du système de capteurs sont reliés à un système de bus, notamment **en ce que** le système de bus est un bus LIN, notamment **en ce que** les capteurs du système de capteurs ont une autorisation de lecture et/ou une autorisation d'écriture concernant ladite au moins une ligne de transmission de données, notamment **en ce que** les capteurs du système de capteurs présentent un dispositif d'interface pour leur interconnexion à ladite au moins une ligne de transmission de données, notamment en ce que le dispositif d'interface est formé par une unité de commande, notamment **en ce qu'**un dispositif de traitement de signal du capteur respectif est formé par une deuxième unité de commande.

7. Procédé selon l'une des revendications précédentes, **caractérisé en ce que** l'on associe aux capteurs du système de capteurs, respectivement une position de groupement définie, notamment **en ce que** l'on caractérise la position de groupement par un codage, notamment **en ce que** l'on mémorise le codage dans le capteur respectivement considéré, et notamment **en ce que** l'on détermine la position de groupement respective par un capteur.

8. Procédé selon l'une des revendications précédentes, **caractérisé en ce que** le système de capteurs fournit des données de caractérisation de poids et/ou des données de caractérisation de position à un dispositif de commande d'airbag.

9. Procédé selon l'une des revendications précédentes, **caractérisé en ce que** l'on affecte à un premier capteur au moins une première tâche de traitement de signal déterminée, et au moins un autre capteur effectue également ladite au moins une tâche de traitement de signal, en vue de permettre une vérification du premier capteur.

10. Procédé selon l'une des revendications précédentes, **caractérisé en ce que** dans le cas d'une défaillance d'un capteur, ses tâches de traitement de signal sont reprises par un ou plusieurs autres capteurs, et notamment **en ce que** le capteur défectueux est simulé par un ou plusieurs capteurs.

11. Système de capteurs pour la caractérisation de la force avec laquelle un premier objet agit sur un deuxième objet (12) réalisé sous la forme d'un siège de véhicule, et/ou de la position du premier objet sur le deuxième objet (12), comprenant une pluralité de capteurs (18a, 18b, 18c) pour la mesure de force, espacés les uns des autres et agencés sur le deuxième objet (12), au moins une ligne de transmission de données (34) à l'aide de laquelle sont reliés les capteurs (18a, 18b, 18c), et un dispositif d'exploitation de données (26) qui produit des données de caractérisation, le dispositif d'exploitation de données (26) étant agencé sur les capteurs (18a, 18b, 18c) de manière répartie sur les capteurs (18a, 18b, 18c), et les tâches de traitement de signal englobant au moins l'une des tâches suivantes, à savoir des processus de calcul sur des signaux de mesure et/ou le traitement de signaux de mesure, la répartition en classes de données destinées à la caractérisation de force et/ou à la caractérisation de position, l'analyse d'erreurs, l'indication d'erreurs, la fonction de diagnostic.

12. Système de capteurs selon la revendication 11, **caractérisé en ce que** le dispositif d'exploitation de données (26) comprend des dispositifs de traitement de signal (30a, 30b, 30c), qui sont agencés respectivement sur les capteurs (18a, 18b, 18c), et notamment **en ce que** les dispositifs de traitement de signal (30a, 30b, 30c) respectifs sont agencés sur ou dans un boitier de capteur du capteur (18a, 18b, 18c) respectivement considéré.

13. Système de capteurs selon la revendication 11 ou la revendication 12, **caractérisé en ce qu'**un capteur respectif (18a, 18b, 18c) présente une première unité de commande pour l'échange de données avec ladite au moins une ligne de transmission de données (34), et présente une deuxième unité de commande pour le traitement de signal.

14. Système de capteurs selon l'une des revendications 11 à 13, **caractérisé en ce que** ladite au moins une ligne de transmission de données (34) est constituée par un système de bus, notamment **en ce que** le système de bus est un système de bus de terrain, et notamment **en ce que** le système de bus est un bus LIN.

15. Utilisation d'un procédé selon l'une des revendications 1 à 10 et d'un système de capteurs selon l'une des revendications 11 à 14 pour la détermination de données de caractérisation relatives à une personne sur un siège de véhicule, et notamment pour produire des données de commande pour un airbag.
